# EUROPEAN PATENT APPLICATION

(11) **EP 2 644 356 A2**
(43) Date of publication of application: **02.10.2013**
(21) Application number: 13160370.6
(22) Date of filing: 21.03.2013
(51) Int. Cl.: B29C 45/76

(54) **Injection molding machine and converter**

(30) Priority: 26.03.2012 JP 2012070436
(71) Applicant: SUMITOMO HEAVY INDUSTRIES, LTD., Tokyo 141-6025 (JP)
(72) Inventor: Mizuno, Hiroyuki, Kanagawa, 237-8555 (JP)
(74) Representative: HOFFMANN EITLE

(57) **Abstract**

An injection molding machine includes a motor (50), a driving part that drives the motor, a conversion part (20) that converts regenerative electric power supplied via the driving part into alternating-current electric power, a breakage detection part (67, 68) that detects a disconnection of a first power line that transmits the alternating-current electric power, and a control part (60) that controls a current flowing in a second power line that is not disconnected when the breakage detection part detects the disconnection of the first power line.

## Description

### BACKGROUND OF THE INVENTION

### 1. Field of the Invention

The present invention relates to an injection molding machine and a converter.

### 2. Description of the Related Art

Patent Document 1 discloses exemplary technology related to a converter of an injection molding machine. The disclosed converter is connected to a three-phase electric power source.
[Patent Document 1] Japanese Laid-Open Patent Publication No. 2004-154961

When breakage of a power line for transmitting alternating-current electric power occurs, excess current may flow in another power line that has not been broken unless some measures are taken to prevent such flow of excess current.

### SUMMARY OF THE INVENTION

It is a general object of at least one embodiment of the present invention to provide an injection molding machine and a converter that substantially obviate one or more problems caused by the limitations and disadvantages of the related art. One particular object of at least one embodiment of the present invention is to provide an injection molding machine and a converter that can prevent excess current from flowing in a power line when another power line is broken.

In one embodiment of the present invention, an injection molding machine includes a motor, a driving part that drives the motor, a conversion part that converts regenerative electric power supplied via the driving part into alternating-current electric power, a breakage detection part that detects a breakage of a first power line that transmits the alternating-current electric power, and a control part that controls a current flowing in a second power line that is not broken when the breakage detection part detects the breakage of the first power line.

In another embodiment of the present invention, a converter includes a conversion part that converts direct-current electric power into alternating-current electric power, a breakage detection part that detects a breakage of a first power line that transmits the alternating-current electric power, and a control part that controls a current flowing in a second power line that is not broken when the breakage detection part detects the breakage of the first power line.

According to an aspect of the present invention, excess current may be prevented from flowing in a power line when another power line is broken.

### BRIEF DESCRIPTION OF THE DRAWINGS

Other objects, features and advantages of the present invention will become more apparent from the following detailed description when read in conjunction with the accompanying drawings, in which:
FIG. 1 is a circuit diagram of an injection molding machine according to an embodiment of the present invention;
FIG. 2 shows simulation waveforms of the injection molding machine under normal operations;
FIG. 3 shows simulation waveforms of the injection molding machine under abnormal operations;
FIG. 4 is a diagram showing an exemplary configuration of a signal processing part of a breakage detection part of the injection molding machine; and
FIGS. 5A and 5B show simulation waveforms of currents flowing in power lines of a converter of the injection molding machine under normal operations and under abnormal operations.

### DETAILED DESCRIPTION OF THE PREFERRED EMBODIMENT

In the following, embodiments of the present invention are described with reference to the accompanying drawings.

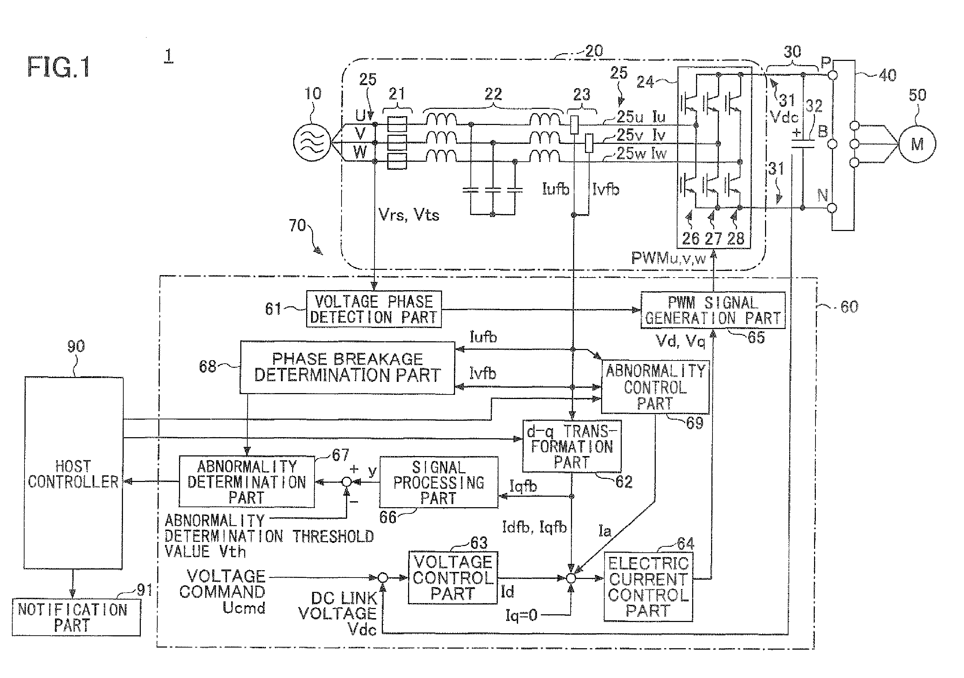

FIG. 1 is a circuit diagram of an electric injection molding machine 1 according to an embodiment of the present invention. The injection molding machine 1 includes a motor 50, an inverter part 40, a DC link 30, a converter 70, and an upper controller 90. The converter 70 includes a converter part 20 and a control part 60.

The injection molding machine 1 is configured to supply power to the motor 50 based on alternating-current electric power supplied from a power source 10 via the converter part 20, the DC link 30, and the inverter part 40. Also, the injection molding machine 1 is configured to feed regenerative electric power generated by the motor 50 back to the power source 10 via the inverter part 40, the DC link 30, and the converter part 20. In this way, energy conservation may be realized at the injection molding machine 1. The power source 10 may be an external alternating-current electric power source that is provided at a factory facility, for example.

The motor 50 used by the injection molding machine 1 is configured to generate regenerative electric power during deceleration. For example, the motor 50 may be a servo motor for opening and closing a mold. Such a servo motor may drive a mold device to open or close a movable platen. By opening and closing the movable platen, mold closing operations for closing the mold, mold opening operations for opening the mold, and mold clamping operations for clamping the mold may be performed, for example.

The motor 50 may also be an injection servo motor, or an ejector servo motor, for example. The injection servo motor may induce a screw within a heating cylinder to move forward. By moving the screw in the forward direction, injection operations for injecting molten material accumulated at the front side of the screw into a mold cavity may be performed. The ejector servo motor may induce an ejector shaft to move towards the mold. By moving the ejector shaft, ejection operations for pushing out a molded product from the mold may be performed. In yet another example, the motor 50 may be plural motors that are connected in parallel to each other.

The inverter part 40 is configured to convert direct-current electric power supplied from the converter part 20 via the DC link 30 into alternating-current electric power and drive the motor 50 based on the converted alternating-current electric power. For example, the inverter part 40 may convert the direct-current electric power supplied from the converter part 20 via the DC link 30 into three-phase electric power. The inverter part 40 is also configured to convert alternating-current regenerative electric power generated by the motor 50 into direct-current regenerative electric power and supply the converted regenerative electric power to the DC link 30 and the converter part 20. For example, the inverter part 40 may convert three-phase electric power supplied from the motor 50 into direct-current electric power. In the case where the inverter part 40 is configured to convert direct-current electric power to and from three-phase electric power, the inverter part 40 may preferably include a three-phase bridge circuit having six power transistors, for example.

The DC link 30 corresponds to a direct-current power source path arranged between a direct-current output side of the converter part 20 and a direct-current input side of the inverter part 40. The DC link 30 includes a pair of direct-current power source lines 31 and a smoothing capacitor 32. The direct-current power source line 31 corresponds to a transmission path for a direct current flowing in between the converter part 20, the inverter part 40, and the smoothing capacitor 32. The smoothing capacitor 32 is configured to smooth or even out a direct-current voltage of the direct-current power source line 31. In one example, the smoothing capacitor 32 may be a electrolytic capacitor. A DC link voltage Vdc of the DC link 30 corresponds to the voltage between both ends of the smoothing capacitor 32.

The converter part 20 is configured to convert alternating-current electric power supplied from the power source 10 into direct-current electric power and supply the converted direct-current electric power to the DC link 30 and the inverter part 40. The converter part 20 is also configured to convert direct-current electric power supplied from the inverter part 40 and the DC link 30 into alternating-current electric power and supply the converted alternating-current electric power to the power source 10. That is, the converter part 20 corresponds to a regenerative converter that converts the direct-current regenerative electric power supplied via the inverter part 40 into alternating-current regenerative electric power and supplies the alternating-current regenerative electric power to the power source 10.

The converter 20 includes a LC filter 22, a current sensor 23, a bridge circuit 24, and a power source line 25. The converter 20 may also include fuses 21.

The fuses 21 are inserted in series with respective phases in the power source line 25. When blowout of the fuse 21 occurs, excess current may be prevented from flowing in the power source line 25 of the corresponding phase having the melted fuse 21. By blocking the excess current, the injection molding machine 1 or the power source 10 may be protected, for example. In other examples, other protective means such as a breaker may be used.

The LC filter 22 is a circuit that filters out harmonic components from the current flowing in the power source line 25. In one example, the LC filter 22 may have capacitors connected between inductors that are inserted in series with phases U, V, and W. The LC filter 22 may have a Y-circuit configuration that includes plural capacitors each having one side connected to corresponding phases and the other side connected to each other at a neutral point as is shown in FIG. 1, for example. It is noted that the LC filter 22 is not limited to such a configuration, and in other examples, the LC filter 22 may have a Δ-circuit configuration in which capacitors are inserted between phases, or a circuit configuration in which only inductors are inserted in series with the phases.

The current sensor 23 corresponds to a current detector that detects the current value of the alternating-current electric power flowing in the power source line 25. The current sensor 23 detects the current values of two power lines of two phases of the three-phase power source line 25, and outputs a detection signal based on the detected phase current values. For example, the current sensor 23 may output a detection signal based on a U-phase current Iufb detected at phase U and a V-phase current Ivfb detected at phase V.

The bridge circuit 24 converts alternating-current electric power flowing in the power source line 25 into direct-current electric power and supplies the converted direct-current electric power to the DC link 30. The bridge circuit 24 also converts direct-current electric power supplied from the DC link 30 into alternating-current electric power and supplies the converted alternating-current electric power to the power source line 25. The bridge circuit 24 may include a three-phase bridge circuit having six power transistors as is shown in FIG. 1, for example.

When the motor 50 is power running, the bridge circuit 24 rectifies the alternating-current electric power flowing in the power source line 25 to a direct-current electric power using diodes that are connected in parallel with the power transistors of the three-phase bridge circuit. On the other hand, when the regenerative electric power of the motor 50 is being generated, the bridge circuit 24 performs regenerative operations by turning on/off the power transistors of the three-phase bridge circuit so that the direct-current regenerative electric power supplied from the DC link 30 may be converted to alternating-current electric power and supplied to the power source 10.

The power source line 25 is a power line that establishes connection between the power source 10 and the bridge circuit 24 and transmits the alternating-current electric power supplied from the bridge circuit 24. In one example, the power source line 25 may include current paths (power lines) 25u, 25v, and 25w of the three phases U, V, and W.

It is noted that although a common path is used as the power running path and the regenerative current path in the converter 20 shown in FIG. 1, in other examples, the converter 20 may have a power running path and a regenerative current path arranged in parallel. For example, a diode bridge circuit that converts the alternating-current electric power flowing in the power source line 25 into direct-current electric power may be inserted in the power running path, and a bridge circuit including a semiconductor switch such as the bridge circuit 24 that converts the direct-current electric power supplied from the DC link 30 into alternating-current electric power may be inserted in the regenerative current path. In this case fuses are inserted in both the power running path and the regenerative current path.

The control part 60 may be an arithmetic control circuit that includes a microcomputer, for example. The control part 60 may include a CPU, an auxiliary storage device such as a ROM that stores control programs, a readable/writable main storage device such as a RAM that stores data such as the result of an arithmetic operation, a timer, a counter, an input interface, and an output interface, for example.

The control part 60 controls operations of the bridge circuit 24 of the converter 20 (e.g., drive operations, regenerative operations). For example, the control part 60 may control the operations of the bridge circuit 24 using a PWM (pulse-width modulation) signal that is generated by a PWM signal generation part 65 so that the regenerative electric power of the motor 50 supplied to the bridge circuit 24 via the inverter part 40 and the DC link 30 may be supplied to the power source 10.

The control part 60 controls the output voltage of the converter 20 (i.e., DC link voltage Vdc of the DC link 30) by controlling the operations of the bridge circuit 24 so that the waveform of the alternating current flowing into the power source 10 from the bridge circuit 24 via the power source line 25 may be arranged into a sine wave that is in synch with the phase of the alternating-current power source voltage of the power source 10.

The control part 60 includes a d-q transformation part 62, a voltage control part 63, a current control part 64, a voltage phase detection part 61, and the PWM signal generation part 65 as means for controlling the operations of the bridge circuit 24.

The d-q transformation part 62 applies d-q transformation to the U-phase current Iufb and the V-phase current Ivfb detected by the current sensor 23 and outputs a d-axis current component Idfb and a q-axis current component Iqfb as the results of the d-q transformation.

The voltage control part 63 generates a current command value Id for the d-axis current component Idfb based on a difference between a predetermined voltage command value Ucmd and the DC link voltage Vdc detected at the DC link 30, the current command value Id being used to converge the difference to zero. The predetermined voltage command value Ucmd may be a signal supplied from the upper controller 90 or a signal generated by the control part 60, for example.

The current control part 64 generates a d-axis component voltage command value Vd based on the d-axis current component Idfb supplied from the d-q transformation part 62 and the current command value Id supplied from the voltage control part 63. Also, the current control part 64 generates a q-axis component voltage command value Vq based on the q-axis current component Iqfb supplied from the d-q transformation part 62 and a current command value Iq for the q-axis current component Iqfb. The current command value Iq is set equal to zero (Iq = 0) so that the power factor of the power source line 25 may be adjusted to 1 (i.e., so that the waveform of the alternating current flowing in the power source line 25 may be adjusted to be a sine wave in the same phase as the alternating-current power source voltage of the power source 10).

The voltage phase detection part 61 detects the alternating-current voltage of each phase of the power source line 25 to detect the phase of the corresponding alternating-current phase voltage.

The PWM signal generation part 65 generates a PWM signal for driving the gates of the transistors within the bridge circuit 24 based on the phase detected by the voltage phase detection part 61 and the d-axis component voltage command value Vd and the q-axis component voltage command value Vq supplied from the current control part 64.

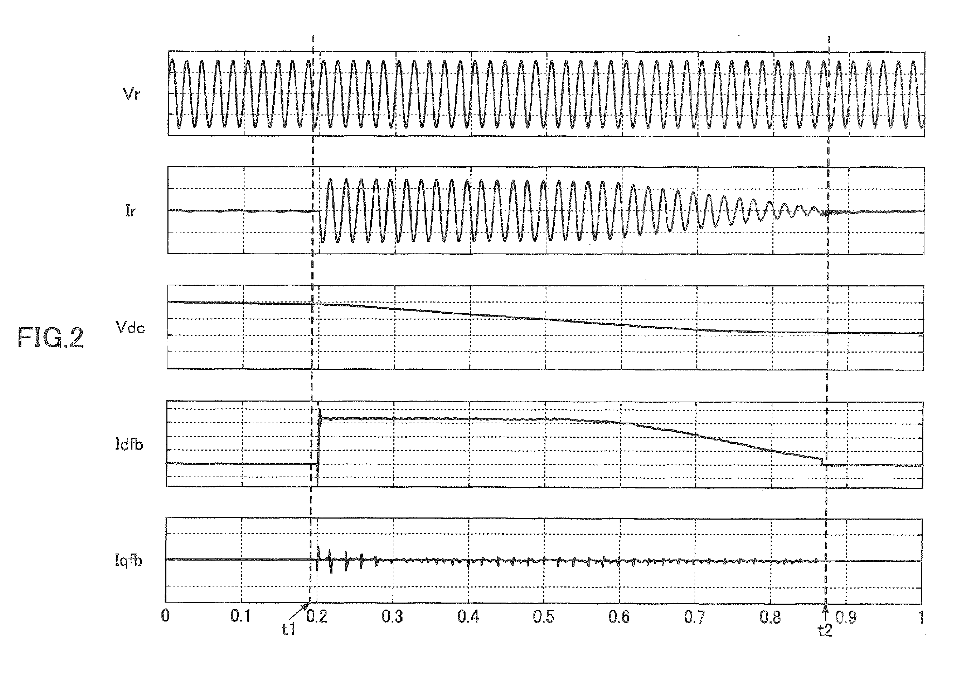

FIG. 2 shows simulation waveforms of the injection molding machine under normal operations. In FIG. 2, Vr represents the alternating-current voltage of the power source line 25 detected by the voltage phase detection part 61 using ground reference, Ir represents the alternating current flowing in the power source line 25 detected by the current sensor 23, Vdc represents the DC link voltage of the DC link 30, Idfb represents the d-axis current component obtained by the d-q transformation part 62 applying a d-q transformation to the alternating current Ir, and Iqfb represents the q-axis current component obtained by the d-q transformation part 62 applying the d-q transformation to the alternating current Ir.

Operations of the converter 70 may be started at time t1 when the DC link voltage Vdc exceeds a predetermined threshold voltage Vth1. When operations of the converter 70 are started, the bridge circuit 24 of the converter part 20 starts regenerative operations and the smoothing capacitor 32 discharges electricity as a result so that the DC link voltage Vdc gradually decreases. The d-axis current component Idfb is controlled by the control part 60 based on the DC link voltage Vdc. The q-axis current component Iqfb is controlled to be zero since the current command value Iq for the q-axis current component Iqfb is set equal to zero. The operations of the converter 70 may be stopped at time t2 when the DC link voltage Vdc falls below a predetermined threshold value Vth2. When the operations of the converter 70 are stopped, the regenerative operations of the bridge circuit 24 of the converter part 20 are stopped.

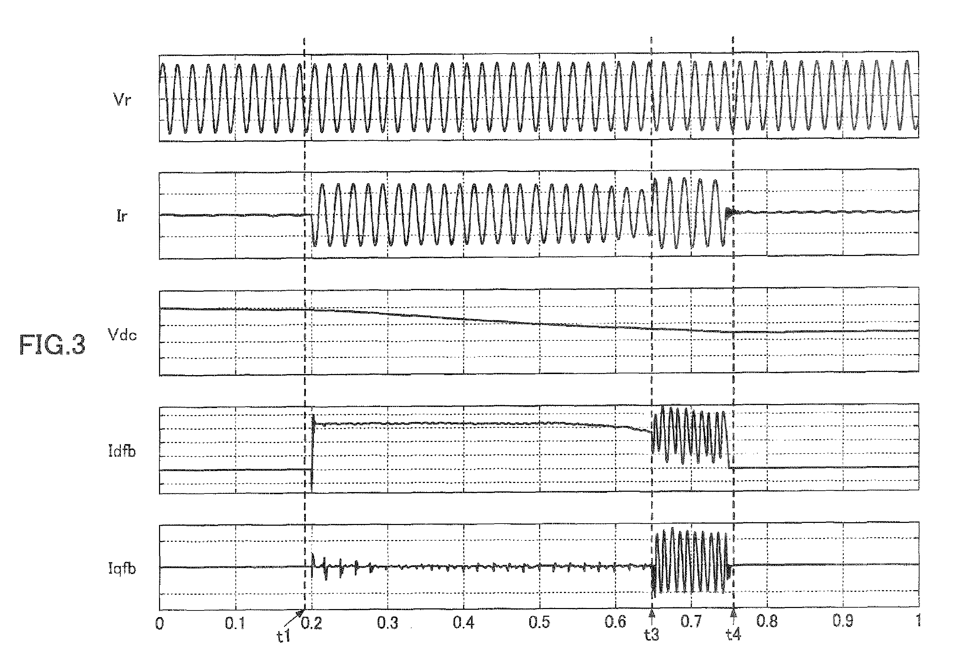

FIG. 3 shows simulation waveforms of the injection molding machine 1 under abnormal operations. FIG. 3 illustrates an exemplary case in which the power line of phase W of the power source line 25 is disconnected at time t3 while the smoothing capacitor 32 is discharging electricity in connection with the regenerative operations of the bridge circuit 24 of the converter part 20. As is shown in FIG. 3, when one of the power lines of the phases of the power source line 25 is disconnected, the current values of the q-axis current component Iqfb and the d-axis current component Idfb corresponding to the results of the d-q transformation applied to the alternating current Ir change dramatically compared to the current values obtained during normal operations.

Thus, the results of the d-q transformation used to control operations of the bridge circuit 24 may be used to detect disconnection of the power source line 25. By using the results of the d-q transformation to control the regenerative/drive operations of the bridge circuit 24 and detect disconnection of the power source line 25, disconnection detection of the power source line 25 may be realized by a simple configuration, for example.

In FIG. 1, the control part 60 detects disconnection of the power source line 25 based on the d-q transformation results obtained by the d-q transformation part 62. For example, the control part 60 may detect disconnection of the power source line 25 based on a change in the current value of the q-axis current component Iqfb and/or the d-axis current component Idfb corresponding to the d-q transformation results.

The control part 60 may include a breakage detection part for detecting disconnection of the current paths 25u, 25v, 25w of the power source line 25 based on the d-q transformation results obtained by the d-q transformation part 62. For example, the breakage detection part of the control part 60 may be realized by a signal processing part 66, an abnormality determination part 67, and a phase breakage determination part 68 shown in FIG. 1.

The signal processing part 66 implements a predetermined filter calculation using the d-q transformation results obtained by the d-q transformation part 62 to generate data y equivalent to the current value of a current component obtained by the d-q transformation part 62.

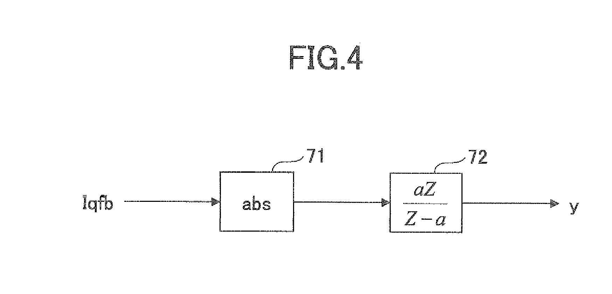

FIG. 4 shows an exemplary configuration of the signal processing part 66 of the breakage detection part of the control part 60. In FIG. 4, the signal processing part 66 includes an absolute value circuit 71 and a first order lag filter 72. It is noted that Z represents a Laplace transform and a represents a predetermined constant. The absolute value circuit 71 obtains the absolute value of the q-axis current component Iqfb. The first order lag filter 72 outputs a value y obtained by calculating a first order lag from the absolute value of the q-axis current component Iqfb. It is noted that although the first order lag filter 72 is used to detect disconnection of the power source line 25 in the present example, the first order lag filter 72 may be replaced by other means such as a timer to detect a current greater than or equal to a predetermined value flowing in the power source line 25 for a predetermined time period.

It is noted that the signal processing part 66 is not limited to the above configuration. For example, instead of the absolute value circuit 72, the signal processing part 66 may include an effective value circuit that outputs an effective value of the q-axis current component Iqfb. In this case, the value y output by the first order lag filter 72 may be the result of calculating the first order lag from the effective value of the q-axis current component Iqfb.

Referring back to FIG. 1, the abnormality determination part 67 determines whether breakage has occurred in the power source line 25 by comparing the data y with a predetermined abnormality determination threshold value Vth. For example, when the data y exceeds the predetermined threshold value Vth, the abnormality determination part 67 may determine that breakage has occurred at the power source line 25 and output a breakage detection signal indicating that breakage of the power source line 25 has been detected to the upper controller 90. The abnormality determination part 67 may alternatively output the abnormality detection signal to another functional part within the control part 60, or to another control part other than a functional part within the control part 60 or the upper control part 90 (e.g., inverter control part that controls operations of the inverter part 40).

The phase breakage determination part 68 determines a disconnected phase (i.e., disconnected current path or power line) by comparing the current values of the current paths 25u, 25v, 25w of the three phases of the power source line 25 detected by the current sensor 23.

For example, when the current sensor 23 detects the current value of the phase current of a power line to be zero, the phase breakage determination part 68 may determine that the corresponding power line is disconnected. When no power lines with phase current values equaling zero are detected by the current sensor 23, but breakage of the power source line 25 is detected based on the data y from the signal processing part 66, the phase breakage determination part 68 determines that a power line that does not have its phase current directly detected by the current sensor 23 has been disconnected.

The upper controller 90 stops the flow of the alternating current in the power source line 25 based on the breakage detection signal from the abnormality determination part 67. The upper control part 90 be an arithmetic control circuit including a microcomputer similar to the control part 60, for example. The upper control part 90 may include a CPU, an auxiliary storage device such as a ROM that stores control programs, a readable/writable main storage device such as a RAM that stores data such as calculation results, an input interface, and an output interface, for example.

For example, upon receiving the breakage detection signal indicating that breakage has occurred at the power source line 25, the upper controller 90 may issue a servo command for stopping operations of the injection molding machine 1 to stop operations of the converter 70 and stop operations of the bridge circuit 24 of the converter part 20. In this way, the regenerative operations of the bridge circuit 24 of the converter part 20 may be stopped so that the flow of the alternating current in the power source line 25 may be stopped. As a result, excess current may be prevented from flowing in the power source line 25 (i.e., over current of the power source line 25 may be prevented).

Also, in one preferred embodiment, when outputting the breakage detection signal indicating that breakage of the power source line 25 has been detected, the upper control part 90 or the abnormality determination part 67 may notify an operator (user) of the injection molding machine 1 and/or another system that breakage has occurred at the power source line 25 via a notification part 91, for example. In this way, the operator (user) and/or another system may be promptly notified of the breakage of the power source line 25. The notification part 91 may be a sound output unit such as a speaker, a display unit such as a display, a light emitting unit such as a lamp, or a communication unit that is capable of establishing communication with another system, for example. Further, the notification part 91 may be configured to notify the operator (user) and/or another system that breakage has occurred at the power source line 25 and/or current control operations are being conducted by an abnormality control part 69, which is described below. It is noted that the other system to which the notification may be addressed may be a system within the injection molding machine 1 or a system outside the injection molding machine 1.

The control part 60 also includes the abnormality control part 69 that performs current control operations when breakage of one of the current paths 25u, 25v, or 25w is detected by the phase breakage determination part 68. The abnormality control part 69 controls the current flowing in the remaining current path that has not been identified by the phase breakage determination part 68 as being disconnected. The abnormality control part may actively control the current flowing in the remaining current path that is not disconnected so that excess current may be prevented from flowing in this current path. In one preferred embodiment, the abnormality control part 69 may control the alternating current flowing in the remaining current path that is not disconnected to be in synch with the phase of the alternating-current voltage of the remaining current path.

When breakage of one of the current paths 25u, 25v, or 25w is detected by the phase breakage determination part 68, the upper control part 90 or the abnormality determination part 67 stops control operations based on the d-q transformation part 62, and switches to control operations based on the abnormality control part 69. It is noted that when the d-q transform 62 continues operations even when breakage of one of the current paths 25u, 25v, or 25w is detected, control operations for controlling the alternating current flowing in the remaining current path that is not disconnected may not be properly performed. Accordingly, operations of the d-q transformation part 62 are stopped so that proper current control operations may be performed by the abnormality control part 69.

The abnormality control part 69 generates a current command value Ia based on the current values of the phase currents detected by the current sensor 23.

For example, when breakage of the current path 25w of phase W is detected by the phase breakage determination part 68, the abnormality control part 69 generates the current command value Ia based on the current value of the U-phase current flowing in the current path 25u of phase U and the current value of the V-phase current flowing in the current path 25v of phase V.

When disconnection of the current path 25u of phase U is detected by the phase breakage determination part 68, the abnormality control part 69 generates the current command value Ia based on the current value of the V-phase current flowing in the current path 25v of phase V and the current value of the W-phase current flowing in the current path 25w of phase W. In this case, since the phase of the W-phase current flowing in the current path 25w of phase W is the reverse of the phase of the V-phase current flowing in the current path 25v of phase V, the current value of the W-phase current flowing in the current path 25w may be calculated based on the current value of the V-phase current flowing in the current path 25v.

When disconnection of the current path 25v of phase V is detected by the phase breakage determination part 68, the abnormality control part 69 generates the current command value Ia based on the current value of the U-phase current flowing in the current path 25u of phase U and the current value of the W-phase current flowing in the current path 25w of phase W. In this case, since the phase of the W-phase current flowing in the current path 25w of phase W is the reverse of the phase of the V-phase current flowing in the current path 25v of phase V, the current value of the W-phase current flowing in the current path 25w may be calculated based on the current value of the V-phase current flowing in the current path 25v.

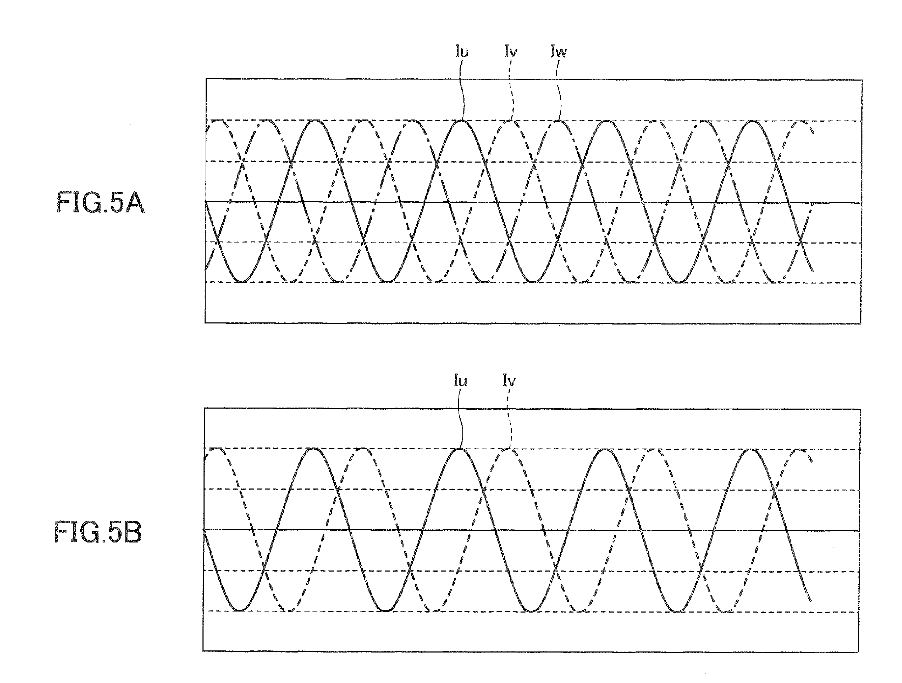

Based on the current command value Ia and the current command value Id, the current control part 64 controls operations of switch driving parts 26, 27, and 28 of the bridge circuit 24 via the PWM signal generation part 65 to be in synch with the voltage of the corresponding current path that is not disconnected. In this way, an alternating current that is in synch with the phase of the alternating-current voltage of the power source 10 may flow in the current path that is not disconnected as is shown in FIG. 5B. In a preferred embodiment, the PWM signal generation part 65 may be configured to output a signal for stopping the switching operations of the switch driving part of the switch driving parts 26, 27, or 28 that is connected to the current path that has been identified as being disconnected.

FIG. 5A shows current waveforms in a case where no disconnection is detected, and FIG. 5B shows current waveforms in a case where disconnection occurs at the current path 25w of phase W. In FIG. 5B, alternating currents Iu and Iv that are in synch with the phases of the U-phase voltage and V-phase voltage (alternating-current voltage of the power source 10) flow in the current paths 25u and 25v of phase U and phase V.

Also, in a preferred embodiment, after the abnormality control part 69 performs the above current control operations to have the alternating currents in synch with the corresponding phase voltages flow in the current paths that are not disconnected, the upper controller 90 may be configured to stop the flow of the alternating currents in these current paths. In this way, even after disconnection is detected, drive operations and regenerative operations of the converter 20 may be extended up to a predetermined timing before these operations are stopped. For example, the operational cycle of the injection molding machine 1 may be slowed down, and the injection molding machine may continue operations until reaching a certain process so that operations may be easily continued or restarted. For example, by continuing operations of the injection molding machine 1 until reaching a mold opening process (more preferably until reaching completion of the mold opening process so that a molded product may be easily removed from the mold), and stopping operations after reaching this point, the molded product remaining in the mold may be easily removed and the injection molding machine 1 may be easily restarted compared to a case where the operations of the injection molding machine 1 are stopped when an injection process is being executed, for example.

Further, the present invention is not limited to these embodiments, and numerous variations and modifications may be made without departing from the scope of the present invention.

For example, the breakage detection part may be arranged to detect breakage of the power source line 25 based on a combination of the change in the d-axis current component Idfb and the change in the q-axis current component Iqfb. In this way, breakage detection accuracy may be improved, for example.

Also, it is noted that although the control part 60 in the above embodiment is configured to detect breakage of the power source line 25 based on the change in the current value of a current component obtained from the d-q transformation results, in other embodiments, the control part 60 may be configured to detect breakage of the power source line 25 based on the frequency change in the current component of the d-q transformation results, or the change in slope of the current component of the d-q transformation results.

Also, the breakage detection method adopted by the breakage detection part is not limited to detection based on the d-q transformation results but may include other types of breakage detection methods.

Also, the type of motor used in the injection molding machine of the present invention is not limited to the motor described above and other types of motors may be used as well.

## Claims

1. An injection molding machine comprising;
a motor;
a driving part that drives the motor;
a conversion part that converts a regenerative electric power supplied via the driving part into an alternating-current electric power;
a breakage detection part that detects a disconnection of a first power line that transmits the alternating-current electric power; and
a control part that controls a current flowing in a second power line that is not disconnected when the breakage detection part detects the disconnection of the first power line.

2. The injection molding machine as claimed in claim 1, wherein
the control part controls the current flowing in the second power line to be in synch with a voltage of the second power line.

3. The injection molding machine as claimed in claim 1 or 2, wherein
the control part controls the current flowing in the second power line by controlling operations of the conversion part.

4. The injection molding machine as claimed in any one of claims 1 to 3, further comprising:
stopping part that stops the current control operations of the control part for controlling the current flowing in the second power line.

5. The injection molding machine as claimed in claim 4, wherein
the stopping part stops the current control operations of the control part at a predetermined timing.

6. The injection molding machine as claimed in claim 5, wherein
the predetermined timing corresponds to a mold opening process execution timing.

7. The injection molding machine as claimed in any one of claims 1 to 6, further comprising:
a notification part that notifies at least one of a user and another system of at least one of the detection of the disconnection of the first power line by the breakage detection part and the execution of the current control operations by the control part.

8. The injection molding machine as claimed in any one of claims 1 to 7, wherein
the breakage detection part detects the disconnection of the power line based on a d-q transformation result obtained by applying the d-q transformation to the alternating current flowing in the first and second power lines.

9. A converter comprising:
a conversion part that converts a direct-current electric power into an alternating-current electric power;
a breakage detection part that detects disconnection of a first power line that transmits the alternating-current electric power; and
a control part that controls a current flowing in a second power line that is not disconnected when the breakage detection part detects the disconnection of the first power line.
